# EUROPEAN PATENT APPLICATION

(11) **EP 4 008 748 A1**
(43) Date of publication of application: **08.06.2022**
(21) Application number: 21210989.6
(22) Date of filing: 29.11.2021
(51) Int. Cl.: C08K 3/04, C08L 21/00, B60C 1/00, C09C 1/44, C01B 32/15, C08K 3/36, C08K 5/548, C08L 9/06, C08L 9/00, C08L 7/00, C08L 15/00

(54) **TIRE AND RUBBER COMPOSITION INCLUDING CARBON DIOXIDE-GENERATED CARBON REINFORCING FILLER**

(30) Priority: 02.12.2020 US 202017109262
(71) Applicant: The Goodyear Tire & Rubber Company, Akron, Ohio 44316 (US)
(72) Inventor: DENNIS-PELCHER, Robert Vincent, Uniontown, 44685 (US); MAZUMDAR, Arindam, Stow, 442244 (US)
(74) Representative: Goodyear IP Law

(57) **Abstract**

A vulcanizable rubber composition comprising, based on parts by weight per 100 parts by weight elastomer (phr), 100 phr of at least one diene-based elastomer and from 1 to 100 phr of a carbon dioxide-generated carbon reinforcement is disclosed. The carbon dioxide-generated carbon reinforcement is produced by a method comprising: mixing a first gas stream containing carbon dioxide and a second gas stream containing a gaseous reducing agent to form a reaction gas mixture; supplying the reaction gas mixture to a reaction zone; reacting the carbon dioxide with the gaseous reducing agent in the reaction zone in the presence of an iron-containing catalyst to form water and the solid carbon product; and separating at least a portion of the water formed in the reaction zone from the reaction gas mixture during the reaction of the carbon dioxide with the gaseous reducing agent.

## Description

### Background

Rubber compositions containing diene-based elastomers often contain reinforcing fillers such as for example rubber reinforcing carbon black and precipitated silica together with a coupling agent for the precipitated silica. Rubber tires may contain at least one component comprised of such rubber composition.

Sometimes it may be desirable to provide a rubber composition containing an alternative reinforcing filler.

For example, such additional, or alternative, reinforcing filler may be in a form of graphene, carbon nanotubes or fullerenes.

Graphene, carbon nanotubes and fullerenes may exhibit exceptional mechanical and electrical properties that make them very interesting for the use in rubber compositions including for tire components.

In the description of this invention, the term "phr" is used to designate parts by weight of a material per 100 parts by weight of elastomer. The terms "rubber" and "elastomer" may be used interchangeably unless otherwise indicated. The terms "vulcanized" and "cured" may be used interchangeably, as well as "unvulcanized" or "uncured", unless otherwise indicated.

### Summary of the Invention

The invention is directed to a vulcanizable rubber composition in accordance with claim 1, to a tire in accordance with claim 12 and to a method in accordance with claim 13.

Dependent claims refer to preferred embodiments of the invention.

In a preferred aspect, the invention is directed to a vulcanizable rubber composition comprising, based on parts by weight per 100 parts by weight elastomer (phr), 100 phr of at least one diene-based elastomer; and from 5 to 80 phr of a carbon dioxide-generated carbon reinforcement produce by a method comprising: mixing a first gas stream containing carbon dioxide and a second gas stream containing a gaseous reducing agent to form a reaction gas mixture; supplying the reaction gas mixture to a reaction zone; reacting the carbon dioxide with the gaseous reducing agent in the reaction zone in the presence of an iron-containing catalyst to form water and the solid carbon product; and separating at least a portion of the water formed in the reaction zone from the reaction gas mixture during the reaction of the carbon dioxide with the gaseous reducing agent.

The invention is further directed to a tire, preferably a pneumatic tire, comprising the vulcanizable rubber composition. The tire may also be a non-pneumatic tire.

### Description of Preferred Embodiments of the Invention

There is disclosed a vulcanizable rubber composition comprising, based on parts by weight per 100 parts by weight elastomer (phr):
100 phr of at least one diene-based elastomer; and from 1 to 100 phr of a carbon dioxide-generated carbon reinforcement produce by a method comprising: mixing a first gas stream containing carbon dioxide and a second gas stream containing a gaseous reducing agent to form a reaction gas mixture; supplying the reaction gas mixture to a reaction zone; reacting the carbon dioxide with the gaseous reducing agent in the reaction zone in the presence of an iron-containing catalyst to form water and the solid carbon product; and separating at least a portion of the water formed in the reaction zone from the reaction gas mixture during the reaction of the carbon dioxide with the gaseous reducing agent.

The invention is further directed to a pneumatic tire comprising the vulcanizable rubber composition.

The rubber compositions includes from 1 to 100 phr, alternatively 5 to 80 phr, alternatively 10 to 40 phr, of a carbon dioxide-generated carbon reinforcement produced by a method comprising: mixing a first gas stream containing carbon dioxide and a second gas stream containing a gaseous reducing agent to form a reaction gas mixture; supplying the reaction gas mixture to a reaction zone; reacting the carbon dioxide with the gaseous reducing agent in the reaction zone in the presence of an iron-containing catalyst to form water and the solid carbon product; and separating at least a portion of the water formed in the reaction zone from the reaction gas mixture during the reaction of the carbon dioxide with the gaseous reducing agent. Suitable carbon dioxide-generated carbon reinforcement may be produced using methods as described in US 8,679,444 and US 10,500,582.

In one embodiment, the carbon dioxide-generated carbon reinforcement includes single-wall carbon nanotubes, multi-wall carbon nanotubes, carbon nanofibers, graphite platelets, graphene, carbon black, amorphous carbon, or a combination thereof.

In one embodiment, the carbon dioxide-generated carbon reinforcement includes agglomerations of particles of solid carbon on an iron-containing catalyst; wherein the solid carbon is selected from the group consisting of graphite, graphene, carbon black, amorphous carbon, fibrous carbon, and buckminster fullerenes; wherein the entangled agglomerations of particles of solid carbon are clustered with a characteristic dimension of less than 1 millimeter; wherein the solid carbon is formed by reacting carbon dioxide with a gaseous reducing agent in the presence of an iron-containing catalyst, at least some of the particles of solid carbon bonded to a particle of the iron-containing catalyst, the catalyst particle having a dimension between 1.3 and 1.6 times a dimension of the particle of solid carbon associated with the catalyst particle.

Suitable carbon dioxide-generated carbon reinforcement filler is produced by Solid Carbon Products LLC, Provo, UT.

The rubber composition includes one or more rubbers or elastomers containing olefinic unsaturation. The phrases "rubber or elastomer containing olefinic unsaturation" or "diene based elastomer" are intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials and such terms are well known to those having skill in the rubber mixing or rubber compounding art. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. Further examples of functionalized elastomers may be used, including functionalized version of polybutadiene, polyisoprene and styrene-butadiene rubbers. The preferred rubber or elastomers are polyisoprene (natural or synthetic), polybutadiene and SBR.

In one aspect the use of at least one additional rubber is preferably of at least two diene-based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/butadiene (E-SBR) might be used having a relatively conventional styrene content of 20 to 28 percent bound styrene or, for some applications, an E-SBR having a medium to relatively high bound styrene content, namely, a bound styrene content of 30 to 45 percent.

By emulsion polymerization prepared E-SBR, it is meant that styrene and 1,3-butadiene are copolymerized as an aqueous emulsion. Such are well known to those skilled in such art. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

The rubber composition may optionally include from 1 to 150 phr, alternatively 5 to 80 phr of silica; alternatively, from 5 to 30 phr, alternatively, from 5 to 20 phr, or from 5 to 10 phr of silica may be used. In one embodiment, the rubber composition excludes silica.

The commonly employed siliceous pigments which may be used in the rubber compound include conventional pyrogenic and precipitated siliceous pigments (silica). In one embodiment, precipitated silica is used. The conventional siliceous pigments employed in this invention are precipitated silicas such as, for example, those obtained by the acidification of a soluble silicate, e.g., sodium silicate.

Such conventional silicas might be characterized, for example, by having a BET surface area, as measured using nitrogen gas. In one embodiment, the BET surface area may be in the range of 40 to 600 square meters per gram. In another embodiment, the BET surface area may be in a range of 80 to 300 square meters per gram. The BET method of measuring surface area is described in the Journal of the American Chemical Society, Volume 60, Page 304 (1930).

The conventional silica may also be characterized by having a dibutylphthalate (DBP) absorption value in a range of 100 to 400, alternatively 150 to 300.

Various commercially available silicas may be used, such as silicas commercially available from PPG Industries under the Hi-Sil trademark with designations 210 and 243; silicas available from Rhodia, with, for example, designations of Z1165MP and Z165GR; and silicas available from Degussa AG with, for example, designations VN2 and VN3.

Commonly employed carbon blacks can be used as a conventional filler in an amount ranging from 0 to 150 phr. In another embodiment, from 20 to 80 phr of carbon black may be used. Representative examples of such carbon blacks include N110, N120, N121, N134, N191N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 210 g/kg and DBP number ranging from 34 to 150 cm³/100 g.

In one embodiment the rubber composition contains from 1 to 20 phr of a sulfur containing organosilicon compound. In one embodiment, the sulfur containing organosilicon compounds include bis(trialkoxysilylalkyl) polysulfides. In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide.

In another embodiment, suitable sulfur containing organosilicon compounds include mercaptosilanes and blocked mercaptosilanes. In another embodiment, suitable sulfur containing organosilicon compounds include compounds disclosed in U.S. Patent No. 6,608,125. In one embodiment, the sulfur containing organosilicon compounds includes 3-(octanoylthio)-1-propyltriethoxysilane, CH₃(CH₂)₆C(=O) -S-CH₂CH₂CH₂Si(OCH₂CH₃)₃, which is available commercially as NXT^{™} from Momentive Performance Materials.

In another embodiment, suitable sulfur containing organosilicon compounds include those disclosed in U.S. Patent Publication No. 2003/0130535. In one embodiment, the sulfur containing organosilicon compound is Si-363 from Degussa.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr, alternatively with a range of from 1.5 to 6 phr. Typical amounts of tackifier resins, if used, comprise 0.5 to 10 phr, usually 1 to 5 phr. Typical amounts of processing aids comprise 1 to 50 phr. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 2 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4, alternatively 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of the tire. For example, the rubber component may be a tread (including tread cap and tread base), sidewall, apex, chafer, sidewall insert, wirecoat or innerliner. In one embodiment, the component is a tread.

The pneumatic tire of the present invention may be a race tire, passenger tire, aircraft tire, agricultural, earthmover, off-the-road or truck tire. In one embodiment, the tire is a passenger or truck tire. The tire may also be a radial or bias.

Vulcanization of the pneumatic tire of the present invention is generally carried out at conventional temperatures ranging from 100°C to 200°C. In one embodiment, the vulcanization is conducted at temperatures ranging from 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

The invention is further illustrated by the following examples.

### Examples

A series of rubber compounds were mixed in a multi-step mix procedure following the compositions given in Table 1, with all amounts given in phr. All samples contained identical amounts of additives including waxes, oil, processing aids, antidegradants, fatty acids, sulfur and accelerators. Following curing the compound samples were tested for various physical properties, with results shown in Table 2.

Viscoelastic properties (G' and tan delta TD) were measured using an ARES Rotational Rheometer rubber analysis instrument which is an instrument for determining various viscoelastic properties of rubber samples, including their storage modulii (G') over a range of frequencies and temperatures in torsion as measured at 10% strain and a frequency of 10 Hz at 30 °C. Generally, a higher G' indicates a better handling performance for a tire containing the given compound. Tan delta is given as measured at 10% strain and a frequency of 10 Hz at 30 °C. Generally, a lower tan delta indicates a lower rolling resistance in a tire containing the given compound.

Cure properties were determined using a Monsanto oscillating disc rheometer (MDR) which was operated at a temperature of 150°C and at a frequency of 11 Hertz. A description of oscillating disc rheometers can be found in The Vanderbilt Rubber Handbook edited by Robert O. Ohm (Norwalk, Conn., R. T. Vanderbilt Company, Inc., 1990), Pages 554 through 557. The use of this cure meter and standardized values read from the curve are specified in ASTM D-2084. A typical cure curve obtained on an oscillating disc rheometer is shown on Page 555 of the 1990 edition of The Vanderbilt Rubber Handbook.

Other viscoelastic properties were determined using a Flexsys Rubber Process Analyzer (RPA) 2000. A description of the RPA 2000, its capability, sample preparation, tests and subtests can be found in these references. H A Pawlowski and J S Dick, Rubber World, June 1992; J S Dick and H A Pawlowski, Rubber World, January 1997; and J S Dick and J A Pawlowski, Rubber & Plastics News, Apr. 26 and May 10, 1993.

Rebound is a measure of hysteresis of the compound when subject to loading, as measured by ASTM D1054. Generally, the higher the measured rebound at 100 °C, the lower the rolling resistance in a tire containing the given compound.

Abrasion was determined as Grosch abrasion rate as run on a LAT-100 Abrader and measured in terms of mg/km of rubber abraded away. The test rubber sample is placed at a slip angle under constant load (Newtons) as it traverses a given distance on a rotating abrasive disk (disk from HB Schleifmittel GmbH). A high abrasion severity test may be run, for example, at a load of 70 newtons, 12° slip angle, disk speed of 20 km/hr for a distance of 250 meters.

Tear strength was determined following ASTM D4393 except that a sample width of 2.5 cm is used and a clear Mylar 15 plastic film window of a 5 mm width is inserted between the two test samples. It is an interfacial adhesion measurement (pulling force expressed in N/mm units) between two layers of the same tested compound which have been co-cured together with the Mylar film window therebetween. The purpose of the Mylar film window is to delimit the width of the pealed area.

**Table 1**

| Sample No. | 1 | 2 | 3 |
|---|---|---|---|
| Type | Control | Control | Invention |
| Polybutadiene¹ | 62 | 62 | 62 |
| Styrene-Butadiene² | 52.25 | 52.25 | 52.25 |
| Silica³ | 80 | 80 | 80 |
| Carbon Black⁴ | 10 | 10 | 0 |
| Carbon dioxide-generated Carbon⁵ | 0 | 0 | 10 |

| | | | |
|---|---|---|---|
| ¹ Budene 1207, from The Goodyear Tire & Rubber Company ² SLF30H41, extended with 37.5 phr oil, from The Goodyear Tire & Rubber Company ³ Zeosil 1165MP ⁴ N120 ⁵ From Solid Carbon Products LLC | | | |

**Table 2**

| Curing Conditions | 10 min @ 170°C | | |
|---|---|---|---|
| Sample No. | 1 | 2 | 3 |
| Type | Control | Control | Invention |

| Stiffness and Hardness | | | |
|---|---|---|---|
| RPA G' 1%, MPa | 2.17 | 2.19 | 2.20 |
| RPA G' 10%, MPa | 1.36 | 1.36 | 1.37 |
| RPA G' 50%, MPa | 0.85 | 0.83 | 0.84 |
| ARES G' 1%, MPa | 3.61 | 3.65 | 3.87 |
| ARES G' 10% MPa | 1.82 | 1.83 | 1.91 |
| ARES G' 50% MPa | 1.10 | 1.09 | 1.12 |
| Shore A (0°C) | 66.0 | 66.8 | 66.8 |
| Shore A (23°C) | 59.9 | 60.6 | 60.5 |
| Shore A (100°C) | 56.7 | 57.2 | 57.4 |

| Tensile Properties | | | |
|---|---|---|---|
| Elongation (Die C), % | 504 | 534 | 525 |
| Tensile (Die C), MPa | 15.4 | 16.3 | 16.1 |
| Modulus 300%/100% (Die C) | 3.80 | 3.75 | 3.68 |
| 100% Modulus (Die C), MPa | 2.05 | 2.01 | 2.12 |
| 300% Modulus (Die C), MPa | 7.80 | 7.53 | 7.81 |

| Processing | | | |
|---|---|---|---|
| RPA 505 G' green, MPa | 0.142 | 0.145 | 0.141 |

| Snow Indicator | | | |
|---|---|---|---|
| G' -20°C, ARES, MPa | 7.87 | 8.06 | 8.01 |

| Wet Indicator | | | |
|---|---|---|---|
| ARES TD 0°C | 0.347 | 0.358 | 0.358 |
| Rebound 0°C | 26 | 26 | 26 |

| Rolling Resistance Indicator | | | |
|---|---|---|---|
| Rebound 23°C | 41 | 41 | 41 |
| Rebound 60°C | 53 | 53 | 53 |
| Rebound 100°C | 60 | 59 | 59 |
| ARES TD 60°C | 0.186 | 0.188 | 0.190 |
| RPA 505 TD 10% | 0.131 | 0.135 | 0.133 |
| ARES TD 10% | 0.224 | 0.224 | 0.228 |

| Tear | | | |
|---|---|---|---|
| Adhesion to Self 100°C (N) | 92 | 97 | 95 |
| Tear (N/mm) | 18 | 19 | 19 |

| Abrasion | | | |
|---|---|---|---|
| Grosch High Severity (mg/km) | 452 | 465 | 447 |

| Cure Properties | | | |
|---|---|---|---|
| Delta Torque MDR 150°C | 15.1 | 15.3 | 15.4 |
| T₂₅ MDR 150°C | 6.4 | 6.5 | 6.6 |
| T₉₀ MDR 150°C | 11.9 | 11.6 | 11.8 |

The example formulation shown in Table 1 and the results shown in Table 2 demonstrate that all of the carbon black in the compound formulation can be replaced at a ratio of 1:1 with a carbon-dioxide generated carbon black produced from carbon dioxide. The excellent compound properties achieved with traditional furnace carbon black can be maintained while improving significantly the recycled nature and sustainability of the compound formulation and therefore the tire using this compound.

## Claims

1. A vulcanizable rubber composition comprising, based on parts by weight per 100 parts by weight elastomer (phr):
100 phr of at least one diene-based elastomer; and from 1 to 100 phr of a carbon dioxide-generated carbon reinforcement produced by a method comprising: mixing a first gas stream containing carbon dioxide and a second gas stream containing a gaseous reducing agent to form a reaction gas mixture; supplying the reaction gas mixture to a reaction zone; reacting the carbon dioxide with the gaseous reducing agent in the reaction zone in the presence of an iron-containing catalyst to form water and the solid carbon product; and separating at least a portion of the water formed in the reaction zone from the reaction gas mixture during the reaction of the carbon dioxide with the gaseous reducing agent.

2. The vulcanizable rubber composition of claim 1, wherein the carbon dioxide-generated carbon reinforcement includes at least one of single-wall carbon nanotubes, multi-wall carbon nanotubes, carbon nanofibers, graphite platelets, graphene, carbon black, amorphous carbon, or a combination thereof.

3. The vulcanizable rubber composition of claim 1 or 2, wherein the carbon dioxide-generated carbon reinforcement includes agglomerations of particles of solid carbon on an iron-containing catalyst, wherein the solid carbon is selected from the group consisting of graphite, graphene, carbon black, amorphous carbon, fibrous carbon, and buckminster fullerenes, and wherein the agglomerations of particles of solid carbon are clustered with a characteristic dimension of less than 1 millimeter.

4. The vulcanizable rubber composition of claim 3 wherein the solid carbon is formed by reacting carbon dioxide with a gaseous reducing agent in the presence of an iron-containing catalyst.

5. The vulcanizable rubber composition of claim 3 or 4 wherein at least some of the particles of solid carbon are bonded to a particle of the iron-containing catalyst, the catalyst particle having a dimension between 1.3 and 1.6 times a dimension of the particle of solid carbon associated with the catalyst particle.

6. The vulcanizable rubber composition of at least one of the previous claims further comprising 1 to 150 phr of silica, preferably 50 to 100 phr of silica.

7. The vulcanizable rubber composition of at least one of the previous claims further comprising from 1 to 20 phr of a sulfur-containing organosilane.

8. The vulcanizable rubber composition of claim 7 wherein the sulfur-containing organosilane is selected from bis(trialkoxysilylalkyl) polysulfides, mercaptosilanes, and blocked mercaptosilanes.

9. The vulcanizable rubber composition of claim 7, wherein the sulfur containing organosilane is selected from the group consisting of 3,3'-bis(triethoxysilylpropyl) disulfide, 3,3'-bis(triethoxysilylpropyl) tetrasulfide and 3-(octanoylthio)-1-propyltriethoxysilane.

10. The vulcanizable rubber composition of at least one of the previous claims wherein the diene-based elastomer is selected from styrene-butadiene rubbers, polybutadiene rubbers, natural rubbers, synthetic polyisoprenes, and functionalized versions thereof.

11. The vulcanizable rubber composition of at least one of the previous claims wherein the amount of carbon dioxide-generated carbon reinforcement ranges from 5 to 80 phr or from 5 to 30 phr.

12. A tire having a component, preferably a tread, comprising the rubber composition of at least one of the previous claims as a vulcanized rubber composition.

13. A method of manufacturing a vulcanizable rubber composition comprising, based on parts by weight per 100 parts by weight elastomer (phr), 100 phr of at least one diene-based elastomer and from 1 to 100 phr of a carbon reinforcement, wherein the carbon reinforcement is a carbon dioxide-generated carbon reinforcement produced by a method comprising: mixing a first gas stream containing carbon dioxide and a second gas stream containing a gaseous reducing agent to form a reaction gas mixture; supplying the reaction gas mixture to a reaction zone; reacting the carbon dioxide with the gaseous reducing agent in the reaction zone in the presence of an iron-containing catalyst to form water and the solid carbon product; and separating at least a portion of the water formed in the reaction zone from the reaction gas mixture during the reaction of the carbon dioxide with the gaseous reducing agent.

14. The method of claim 13 wherein the carbon dioxide-generated carbon reinforcement includes agglomerations of particles of solid carbon on an iron-containing catalyst, wherein the solid carbon is selected from the group consisting of graphite, graphene, carbon black, amorphous carbon, fibrous carbon, and buckminster fullerenes, wherein the agglomerations of particles of solid carbon are clustered with a characteristic dimension of less than 1 millimeter, and wherein the solid carbon is formed by reacting carbon dioxide with a gaseous reducing agent in the presence of an iron-containing catalyst.
